# EUROPEAN PATENT APPLICATION

(11) **EP 1 804 369 A2**
(43) Date of publication of application: **04.07.2007**
(21) Application number: 06127209.2
(22) Date of filing: 27.12.2006
(51) Int. Cl.: H02P 5/74

(54) **Apparatus and method for varying speed of hybrid induction motor**

(30) Priority: 29.12.2005 KR 20050134441
(71) Applicant: LG ELECTRONICS INC., Seoul, 150-721 (KR)
(72) Inventor: Oh, Seung-Suk, Gwangmyeong, Gyeonggi-Do (KR); Ahn, Jae-Hong, Anyang, Gyeonggi-Do (KR); Shin, Hyoun-Jeong, Incheon (KR)
(74) Representative: Vossius & Partner

(57) **Abstract**

An apparatus and method for varying a speed of a hybrid induction motor (HIM). The apparatus comprises a starting capacitor; a driving capacitor; at least one speed varying capacitor for varying a speed of a HIM by a control signal; and a controlling unit for analyzing a user's command, and outputting a control signal to vary the speed of the HIM based on a result of the analysis.

## Description

The present invention relates to a hybrid induction motor (HIM), and more particularly, to an apparatus and method for varying a speed of a hybrid induction motor (HIM) capable of varying a speed of the HIM by varying a driving capacitance.

In general, a single-phase induction motor is widely used as a fan motor of an air conditioner due to a low cost.

However, since the single-phase induction motor has a low efficiency, research to improve efficiency of the fan motor by controlling power of the air conditioner is being performed

Accordingly, a brushless direct current (BLDC) motor driven by a microcomputer is being used as the fan motor of the air conditioner.

However, the BLDC motor requires a driving circuit thus to cause a high cost.

To solve the problem, a hybrid induction motor (HIM) of a high efficiency is being used as the fan motor of the air conditioner.

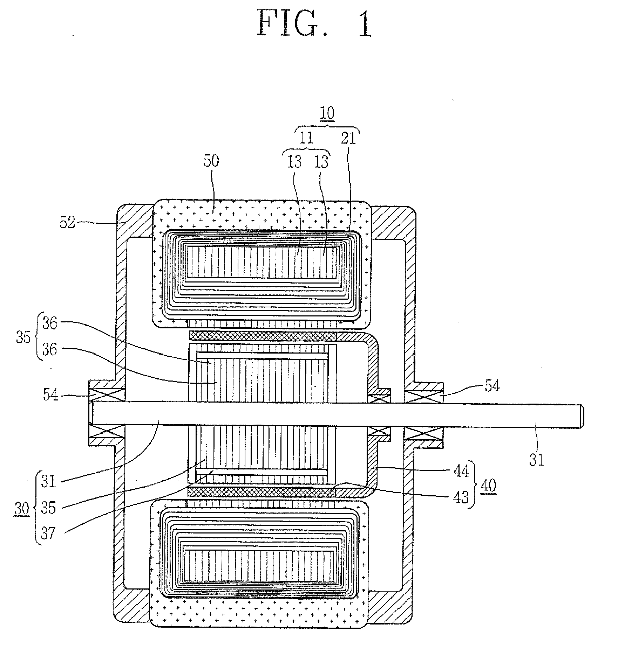

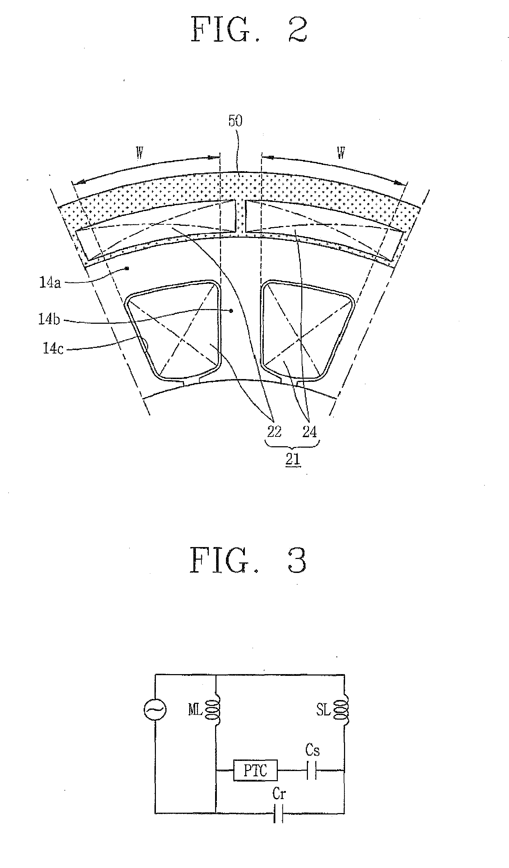

FIG. 1 is a sectional view showing a hybrid induction motor (HIM) in accordance with the conventional art, and FIG. 2 is a partial planar view showing a stator core of FIG. 1.

As shown, the HIM comprises a stator 10, a squirrel type rotor 30 disposed in the stator 10 so as to be rotatable centering around a rotation shaft 31, and a permanent magnet rotor 40 disposed between the stator 10 and the squirrel type rotor 30 so as to be rotatable centering around the rotation shaft 31.

The squirrel type rotor 30 includes a rotor core 35 formed of a plurality of steel plates 36 insulation-laminated together, and a plurality of conductive bars 37 penetratingly-formed at the rotor core 35 in a circumferential direction of the rotor core 35 with an interval therebetween by a die casting method.

The permanent magnet rotor 40 includes a permanent magnet 43 having a circular shape or a cylindrical shape, and arranged at a circumferential portion of the squirrel type rotor 30 so that an S-pole and an N-pole may be alternately implemented; and a magnet supporting member 44 having one end free-rotatably coupled to the rotation shaft 31 and another end coupled to the permanent magnet 43, for supporting the permanent magnet 43.

The stator 10 includes a stator core 11 formed of a plurality of steel plates 13 insulation-laminated together, each steel plate having a disc shape and having a plurality of slots 14c of the same size W in a circumferential direction thereof; a stator coil 21 wound on the stator core 11; and a protecting portion 50 formed at a circumferential portion of the stator coil 21 by a molding method. A shaft supporting bracket 52 having a bearing 54 so as to rotatably support the rotation shaft 31 is integrally coupled to both sides of the protecting portion 50.

Each of the steel plates 13 of the stator core 11 includes a ring-shaped yoke 14a; and a plurality of teeth 14b protruding from an inner side of the yoke 14a towards the center of the steel plate in a radial direction, and having a constant interval therebetween so that a slot 14c of the same size W may be formed therebetween in a circumferential direction. The stator coil 21 has a main coil 22 and a sub coil 24 wound on each slot 14c and having different phases from each other.

FIG. 3 is a view showing a driving circuit of the HIM.

Referring to FIG. 3, when power is supplied to the HIM, a rotating magnetic field is generated by a current flowing on a main winding coil (ML), a subsidiary winding coil (SL), and a starting capacitor (Cs).

When the rotating magnetic field is generated by the current flowing on the subsidiary winding coil (SL), a synchronous rotor is synchronized and then rotates at a synchronous speed.

By the synchronous rotor implemented as a magnet, a rotating magnetic field having an intensive flux is generated and thereby an induction rotor rotates.

A PTC of the HIM is turned off as a certain time lapses.

By the current flowing on the main winding coil (ML), the subsidiary winding coil (SL), and a driving capacitor (Cr), the induction rotor is rotated.

When the induction rotor rotates, a rotational force of the induction rotor is transmitted to the rotation shaft.

In case that a fan is coupled to the rotation shaft, the fan generates an air flow while being rotated.

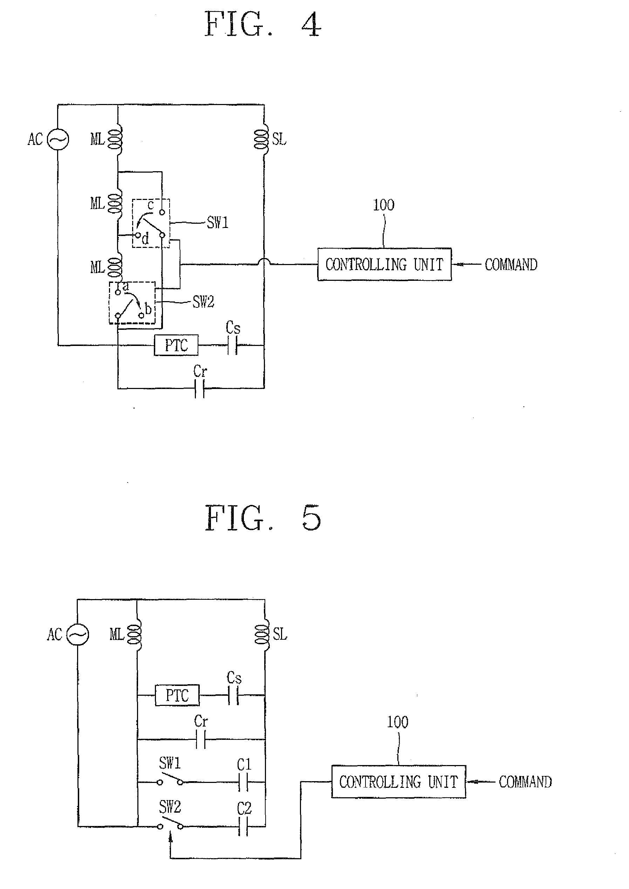

FIG. 4 is a circuit view showing a configuration of a speed varying apparatus of the HIM.

Referring to FIG. 4, the speed varying apparatus of the HIM includes a main coil (ML), a first speed varying coil (VL1), and a second speed varying coil (VL2); first and second switches SW1 and SW2 for selecting the main coil (ML), the first speed varying coil (VL1), and the second speed varying coil (VL2) by a control signal; and a control unit 100 for outputting a control signal to vary a speed of the HIM by a user's command.

The controlling unit 100 analyzes a command inputted from outside, and outputs a control signal to control the first and second switches SW1 and SW2 based on the analysis result.

The first and second switches SW1 and SW2 are respectively switched by the control signal, and a speed of the HIM is varied by changing the number of windings of the coil.

The more the number of windings of the coil is increased, the HIM is operated at a low speed.

For instance, when a user inputs a command to operate the HIM with a high speed, the controlling unit 100 outputs a control signal so that only the main coil (ML) may be selected. Accordingly, the first and second switches SW1 and SW2 are switched, and the HIM rotates at a high speed by the current flowing on the main winding coil (ML), the subsidiary winding coil (SL), and the driving capacitor (Cr).

When the HIM is to be operated at a low speed, the current flowing on the main coil (ML), the first and second speed varying coils (VL1, VL2), and the driving capacitor (Cr) is applied to the HIM.

When the HIM is to be operated at a middle speed, the current flowing on the main coil (ML), the first speed varying coil (VL1), and the driving capacitor (Cr) is applied to the HIM.

According to the conventional art, a speed of the HIM is varied by changing the number of windings of the coil with using a tap winding method.

However, the conventional apparatus has problems that efficiency of the coil winding is lowered, fabrication cost is increased, and an entire size is increased.

Furthermore, a starting voltage and a breakdown voltage are increased due to a resistance increase of the winding coil.

Therefore, an object of the present invention is to provide an apparatus and method for varying a speed of a hybrid induction motor (HIM) capable of enhancing efficiency of the HIM by varying a speed of the HIM by varying a driving capacitance.

To achieve these and other advantages and in accordance with the purpose of the present invention, as embodied and broadly described herein, there is provided an apparatus for varying a speed of a hybrid induction motor (HIM), comprising: a starting capacitor; a driving capacitor; and at least one speed varying capacitor for varying a speed of a HIM.

According to another aspect of the present invention, the apparatus for varying a speed of a hybrid induction motor (HIM) comprises a starting capacitor for generating a starting capacitance; a driving capacitor for generating a driving capacitance when a HIM reaches a synchronous speed; at least one speed varying capacitor for varying a speed of the HIM by a control signal; and a controlling unit for outputting a control signal to vary a speed of the HIM according to a speed varying condition inputted from outside.

To achieve these and other advantages and in accordance with the purpose of the present invention, as embodied and broadly described herein, there is also provided a method for varying a speed of a hybrid induction motor (HIM), comprising: starting a hybrid induction motor (HIM) by a starting capacitor; driving the HIM by a driving capacitor when the HIM reaches a synchronous speed; judging whether or not a speed varying condition has been inputted from outside; and if the speed varying condition has been inputted from outside, varying a speed of the HIM by varying a capacitance of the HIM according to the speed varying condition.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a sectional view showing a hybrid induction motor (HIM) in accordance with the conventional art;
FIG. 2 is a partial planar view showing a stator core of FIG. 1;
FIG. 3 is a view showing a driving circuit of the HIM;
FIG. 4 is a circuit view showing a configuration of a speed varying apparatus of the HIM;
FIG. 5 is a circuit diagram showing a configuration of an apparatus for varying a speed of a hybrid induction motor (HIM) according to a first embodiment of the present invention; and
FIG. 6 is a flowchart showing a method for varying a speed of a HIM according to a first embodiment of the present invention.

Reference will now be made in detail to the preferred embodiments of the present invention, examples of which are illustrated in the accompanying drawings.

Hereinafter, will be explained an apparatus and method for varying a speed of a hybrid induction motor (HIM) capable of enhancing efficiency of the HIM by varying a speed of the HIM by varying a driving capacitance.

FIG. 5 is a circuit diagram showing a configuration of an apparatus for varying a speed of a hybrid induction motor (HIM) according to a first embodiment of the present invention.

As shown, the apparatus for varying a speed of a HIM comprises a starting capacitor (Cs) having a capacitance larger than that of a driving capacitor, for applying a high current flowing through a sub coil (SL) to a HIM at the time of an initial driving; a PTC (positive temperature coefficient) serially connected to the starting capacitor (Cs), and turned off by the high current; a driving capacitor (Cr) for applying a low current flowing through a main coil (ML) to the HIM; first and second speed varying capacitors C1 and C2 connected to the driving capacitor (Cr) in parallel, for varying a speed of the HIM by increasing a driving capacitance; and a controlling unit 100 for analyzing a user's command, and outputting a control signal to vary a speed of the HIM.

The first and second speed varying capacitors C1 and C2 are serially connected to first and second switches (SW1 and SW2) switched by the control signal, respectively.

When a command for a high speed driving is inputted, the controlling unit 100 connects the first and second speed varying capacitors C1 and C2 to the driving capacitor Cr in parallel. On the contrary, when a command for a low speed driving is inputted, the controlling unit 100 disconnects the first and second speed varying capacitors C1 and C2 connected to the driving capacitor Cr in parallel.

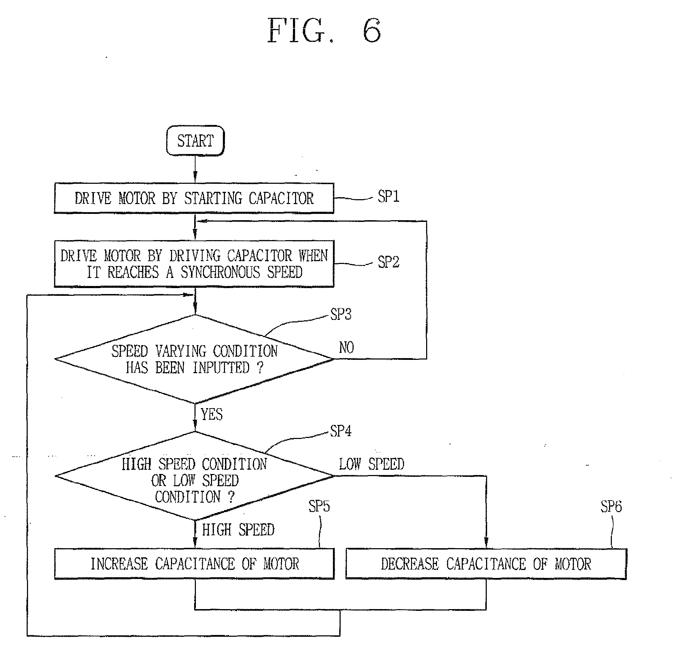

Hereinafter, an operation of the apparatus for varying a speed of a HIM according to the present invention will be explained with reference to FIG. 6.

First, a high current flowing through the sub coil (SL) by the starting capacitor (Cs) is applied to the HIM. Accordingly, a rotating magnetic field is generated by the starting capacitor (Cs) thus to start to drive a magnet rotor (SP1).

When the magnet rotor reaches a synchronous speed, the PTC is turned off. Then, the magnet rotor is rotated by the rotating magnetic field generated by the driving capacitor (SP2).

The controlling unit 100 detects whether or not a speed varying condition exists (SP3). When the speed varying condition is detected, the controlling unit 100 analyzes it and then outputs a control signal to vary a speed of the HIM based on the analysis result (SP4 to SP6).

When the detected condition is a high speed condition (SP4), the controlling unit 100 increases a capacitance of the HIM (SP5).

That is, the controlling unit 100 turns on the first and second switches SW1 and SW2, and connects the first and second speed varying capacitors C1 and C2 to the driving capacitor Cr in parallel.

Accordingly, the HIM rotates at a high speed by the increased capacitance.

On the contrary, when the detected condition is a low speed condition (SP4), the controlling unit 100 decreases a capacitance of the HIM (SP6).

That is, the controlling unit 100 turns off the first and second switches SW1 and SW2, and disconnects the first and second speed varying capacitors C1 and C2 connected to the driving capacitor Cr in parallel.

Accordingly, the HIM rotates at a low speed by the decreased capacitance.

In the conventional art, a speed of the HIM is varied by varying the number of windings of the coil. However, in the present invention, the speed of the HIM is varied by connecting a plurality of capacitors to the driving capacitor in parallel or disconnecting the plurality of capacitors connected from the driving capacitor according to a speed varying condition.

Accordingly, in the present invention, a fabrication cost is decreased and an entire size is decreased.

Furthermore, since the conventional coil resistance due to change of the number of windings of the coil is reduced, a driving efficiency is increased and a starting voltage and a breakdown voltage are reduced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. An apparatus for varying a speed of a hybrid induction motor (HIM), comprising:
a starting capacitor for generating a starting capacitance;
a driving capacitor for generating a driving capacitance when a hybrid induction motor (HIM) reaches a synchronous speed;
at least one speed varying capacitor for varying a speed of the HIM by a control signal; and
a controlling unit for outputting a control signal to vary a speed of the HIM according to a speed varying condition.

2. The apparatus of claim 1, wherein said at least one speed varying capacitor is connected to the driving capacitor in parallel.

3. The apparatus of claim 1 or 2, wherein a switching device is connected to said at least one speed varying capacitor in serial.

4. The apparatus of any of claims 1 to 3, wherein in case of a high speed condition, the controlling unit outputs a control signal to increase the number of capacitors connected to the driving capacitor in parallel.

5. The apparatus of any of claims 1 to 3, wherein in case of a low speed condition, the controlling unit outputs a control signal to decrease the number of capacitors connected to the driving capacitor in parallel.

6. A method for varying a speed of a hybrid induction motor (HIM), comprising:
starting a hybrid induction motor (HIM) by a starting capacitor;
driving the HIM by a driving capacitor when the HIM reaches a synchronous speed;
judging whether or not a speed varying condition has been inputted from outside; and
if the speed varying condition has been inputted from outside, varying a speed of the HIM by varying a capacitance of the HIM according to the speed varying condition.

7. The method of claim 6, the step of varying the speed of the HIM comprises increasing a capacitance of the HIM in case of a high speed condition.

8. The method of claim 7, wherein in the step of increasing the capacitance of the HIM, the number of capacitors connected to the driving capacitor in parallel is increased.

9. The method of claim 6, the step of varying the speed of the HIM comprises decreasing a capacitance of the HIM in case of a low speed condition.

10. The method of claim 9, wherein in the step of decreasing the capacitance of the HIM, the number of capacitors connected to the driving capacitor in parallel is decreased.
